# FASCICULE DE BREVET EUROPEEN

(11) **EP 1 470 425 B1**
(45) Date de publication et mention de la délivrance du brevet: **09.08.2006**
(21) Numéro de dépôt: 03715053.9
(22) Date de dépôt: 28.01.2003
(51) Int. Cl.: G01N 35/02, G01N 35/04

(54) **DISPOSITIF POUR L'ANALYSE AUTOMATISEE D'UN ECHANTILLON LIQUIDE**
VORRICHTUNG ZUR AUTOMATISIERTEN ANALYSE FLÜSSIGER PROBEN
DEVICE FOR AUTOMATIC ANALYSIS OF A LIQUID SAMPLE

(30) Priorité: 01.02.2002 FR 0201237
(43) Date de publication de la demande: 27.10.2004
(73) Titulaire: Stago Instruments, 92230 Gennevilliers (FR)
(72) Inventeur: ROUSSEAU, Alain, F-75004 Paris (FR); ABOU-SALEH, Khaled, F-92400 Courbevoie (FR); PERIN, Patrick, F-78210 Saint Cyr l'Ecole (FR); POUTREL, Philippe, F-95430 Auvers sur Oise (FR)
(74) Mandataire: de Saint-Palais, Arnaud Marie
(86) Numéro de dépôt international: PCT/FR2003/000253
(87) Numéro de publication internationale: WO 2003/065047

(56) Documents cités:
- EP-A- 0 325 874
- EP-A- 0 642 830
- EP-A- 0 837 331
- EP-A- 0 904 841
- WO-A-99/64839
- PATENT ABSTRACTS OF JAPAN vol. 008, no. 033 (P-254), 14 février 1984 (1984-02-14) & JP 58 189559 A (TOKYO SHIBAURA DENKI KK), 5 novembre 1983 (1983-11-05)
- PATENT ABSTRACTS OF JAPAN vol. 008, no. 109 (P-275), 22 mai 1984 (1984-05-22) & JP 59 017160 A (OLYMPUS KOGAKU KOGYO KK), 28 janvier 1984 (1984-01-28)
- PATENT ABSTRACTS OF JAPAN vol. 1999, no. 12, 29 octobre 1999 (1999-10-29) -& JP 11 183484 A (OLYMPUS OPTICAL CO LTD), 9 juillet 1999 (1999-07-09)
- PATENT ABSTRACTS OF JAPAN vol. 016, no. 128 (C-0924), 2 avril 1992 (1992-04-02) & JP 03 292880 A (ERUMETSUKUSU:KK), 24 décembre 1991 (1991-12-24)
- PATENT ABSTRACTS OF JAPAN vol. 007, no. 015 (P-169), 21 janvier 1983 (1983-01-21) & JP 57 171265 A (RAION KK), 21 octobre 1982 (1982-10-21)

## Description

La présente invention concerne un dispositif pour l'analyse automatisée d'un échantillon liquide. Elle a plus particulièrement pour objet, mais non exclusivement, un perfectionnement à un appareil d'analyse automatique utilisable notamment pour la détermination des temps de modification de l'état physique d'un milieu.

Cet appareil s'applique notamment à la détermination du temps de coagulation du sang conformément à un processus selon lequel l'échantillon sanguin est disposé dans le fond d'une cuvette contenant une bille ferromagnétique entraînée dans un mouvement périodique sous l'effet d'un champ magnétique extérieur. Les modifications des mouvements de la bille ferromagnétique (par exemple les variations d'amplitude et/ou de fréquence) qui sont représentatives des changements de l'état physique du sang, sont alors détectées à l'aide de moyens appropriés.

Un tel appareil se trouve exposé dans le brevet WO 99 64839 déposé au nom de la société Junior Instruments.

Il comprend un distributeur de cuvettes à usage unique comprenant chacune un fond incurvé constituant le chemin de roulement de la bille et une face opposée au fond présentant une ouverture. Ces cuvettes sont disposées côte à côte et fixées de façon détachable sur un film support souple qui obture leurs ouvertures. Le film équipé de cuvettes peut être enroulé sur une bobine pouvant s'engager sur un moyeu prévu dans un compartiment de stockage et de distribution de l'appareil. Les cuvettes défilent une à une dans un poste de détection.

Le film support obturant les ouvertures des cuvettes, il est nécessaire de réaliser une fente par incision pour permettre le passage de la pipette. Ce faisant, on exerce sur le film une pression susceptible d'entraîner la déconnexion de la cuvette.

Par ailleurs, la présence de cette fente rend plus délicate l'opération de pipetage avec risque de souillure du film, étant entendu que par le document "Patent Abstracts of Japan vol. 008, no. 033 (P-254), 14 février 1984" on connaît un dispositif permettant un engagement sans contact d'une aiguille de prélèvement au travers d'un orifice réalisé dans le bouchon d'un récipient à échantillon.

En outre, la présence du film implique l'usage d'une source lumineuse puissante et l'homogénéité du faisceau engendré par cette source au travers de la cuvette sera perturbée à la fois par la présence de la fente et des éventuelles souillures présentes sur le film. De plus, le milieu hétérogène traversé par le faisceau généré par la source engendre des réflexions multiples notamment contre les parois et les arrêtes des cuvettes, qui risquent de fausser l'analyse du mouvement de la bille ferromagnétique.

L'invention a donc plus particulièrement pour but de résoudre ces inconvénients.

A cet effet, elle propose un dispositif pour l'analyse automatisée d'un échantillon de liquide, ce dispositif comportant une succession de cuvettes à usage unique comprenant chacune un fond, une face supérieure opposée au fond présentant une ouverture et deux rebords opposés qui s'étendent de part et d'autre de la cuvette sensiblement dans le plan de l'ouverture, les cuvettes étant disposées côte à côte et solidarisées les unes aux autres par un film souple fixé sur lesdits rebords, recouvrant au moins partiellement les ouvertures desdites cuvettes, et présentant une succession d'orifices situés respectivement au droit des ouvertures desdites cuvettes, ces orifices étant dimensionnés de manière à permettre l'engagement sans contact des moyens d'injection et/ou de prélèvement.

Selon l'invention, ce dispositif comprend un poste de détection optique faisant intervenir une source lumineuse par exemple infrarouge éclairant la face supérieure de la cuvette et un détecteur optoélectronique disposé en dessous du fond, le but de l'éclairage étant de permettre la lecture du mouvement de la bille par la détection optoélectronique. Le film est réalisé en une matière diffusante pour la lumière infrarouge rendant le faisceau lumineux d'éclairage plus homogène. Les dimensions de l'orifice seront alors déterminées notamment en fonction des dimensions de la pipette, de sa position ainsi que de l'homogénéité recherchée de l'intensité des faisceaux lumineux traversant un volume utile prédéterminé de la cuvette.

Dans le cas où le dispositif effectue une détermination des temps de modification de l'état physique d'un échantillon contenu dans la cuvette par détection des déplacements d'une bille mobile sur le fond de la cuvette, le susdit orifice pourra présenter la forme d'une ouverture oblongue axée parallèlement au chemin de roulement de la bille et dont la largeur est légèrement inférieure au diamètre de la bille.

Avantageusement, la matière constituant le film pourra présenter des propriétés d'absorption de liquide par exemple des porosités de manière à fixer les éventuelles projections de liquide et de réduire ainsi les risques de contamination des échantillons contenus dans les cuvettes adjacentes à la cuvette en cours d'analyse.

Ce dispositif pourra également comprendre un poste de pipetage faisant intervenir une pipette se déplaçant transversalement par rapport à l'axe de défilement des cuvettes. De manière à pallier une imprécision du mouvement de la pipette, l'application de ladite pipette sur le film ou ses bords pouvant entraîner le décrochage des cuvettes et/ou des projections, les orifices du film s'étendent selon un axe transversal audit axe de défilement des cuvettes.

De surcroît, ce dispositif pourra comprendre un poste de découpe des cuvettes analysées de manière à les recueillir dans un unique contenant.

Il est à noter que cet ensemble cuvettes-film reste adaptable sur les modèles déjà existants.

Un mode d'exécution de l'invention sera décrit ci-après, à titre d'exemple non limitatif, avec référence aux dessins annexés dans lesquels :

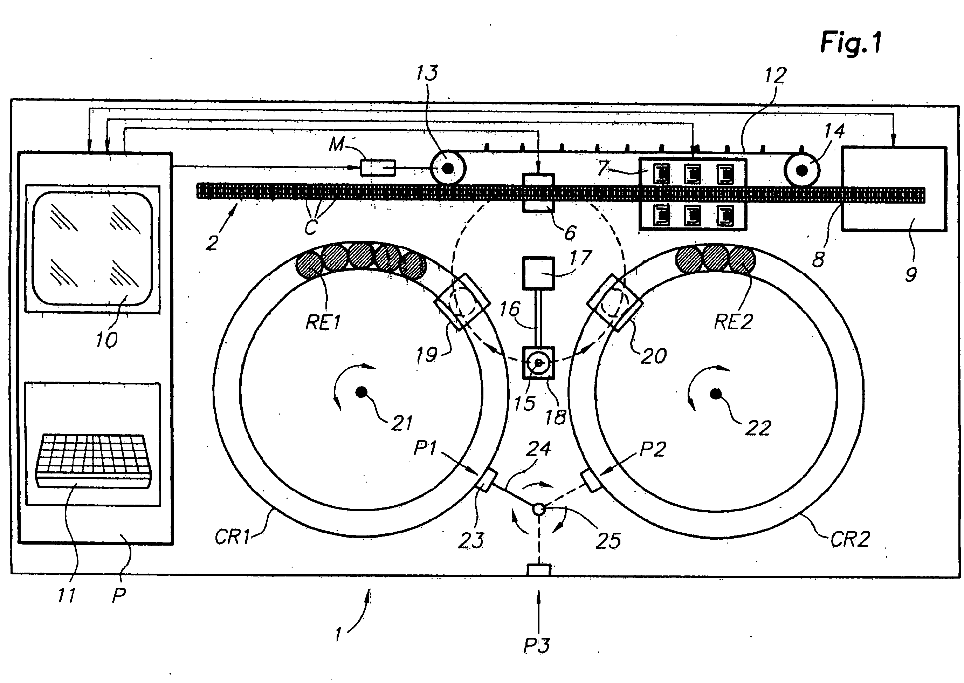

La figure 1 est une représentation schématique d'un appareil d'analyse automatique de dimension moyenne ;
La figure 2 est une vue en perspective schématique d'une cuvette montée sur le film ;
La figure 3 est une vue schématique de dessus du film équipé de ses cuvettes et du système d'entraînement à crémaillère ;
La figure 4 est une coupe schématique verticale selon A/A de la figure 3.

Dans cet exemple, l'appareil d'analyse automatique 1 fait intervenir une alimentation en cuvettes comportant une succession d'une centaine cuvettes formant une bande 2.

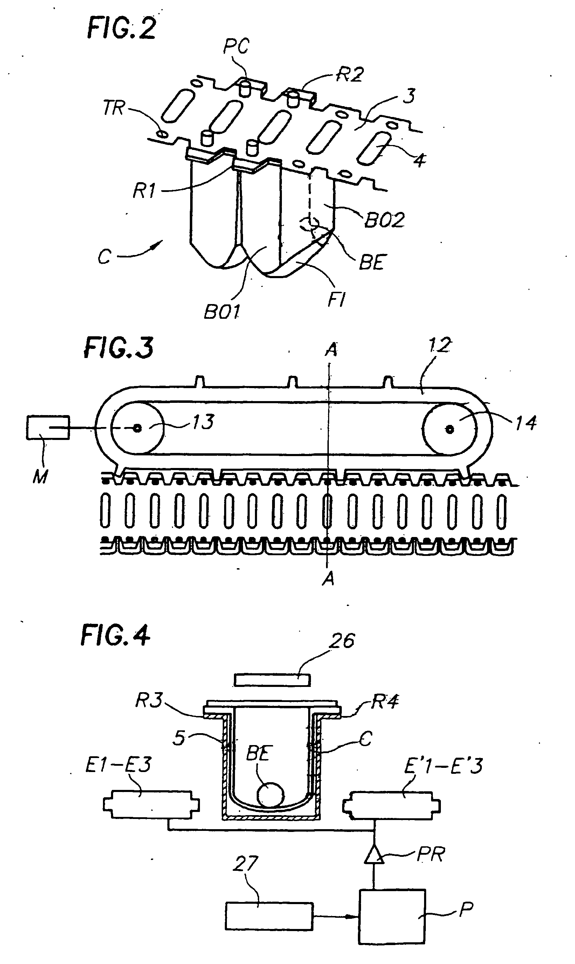

Comme illustré sur la figure 2, les cuvettes C réalisées par moulage d'une matière plastique transparente présentent chacune un corps de forme plate parallélépipédique dont le fond incurvé FI constitue un chemin de roulement pour une bille BE en matière ferromagnétique. A l'opposé de ce fond FI, la cuvette C présente une ouverture au niveau de laquelle ses deux bords opposés BO₁, BO₂ sont prolongés à angle droit par deux rebords respectifs R₁, R₂ munis chacun d'une protubérance cylindrique PC s'étendant du côté opposé au corps. Ces deux protubérances sont destinées à venir s'engager à force dans deux trous respectifs TR respectivement prévus sur les deux bordures latérales du film. Les rebords R₁, R₂ présentent par exemple la forme d'un trapèze isocèle dont la grande base est solidaire de la cuvette. Les bordures latérales d'un film support 3 présentent alors dans l'intervalle des rebords R₁, R₂ des cuvettes successives des découpes trapézoïdales dont les bords obliques s'étendent au droit des bords obliques des rebords R₁, R₂. Grâce à ces dispositions, les bordures latérales du film présentent chacune un profil dentelé dont les dents sont accentuées par la présence des rebords R₁, R₂ des cuvettes.

Le film est souple et est constitué d'une matière absorbante, en papier par exemple. Il est percé au-dessus de chaque cuvette d'un orifice oblong 4 qui s'étend selon l'axe longitudinal des cuvettes transversalement à l'axe de défilement des cuvettes.

Selon le dispositif représenté sur la figure 4, la bande de cuvettes 2 est guidée par un rail 5. Ce rail possède une section en forme de U dont les deux ailes verticales sont prolongées à angle droit par deux rebords R₃, R₄, les rebords R₁, R₂ des cuvettes reposant sur les rebords R₃, R₄. La bande passe successivement par un poste de pipetage 6, un poste de détection 7 et un poste de découpe 8 à la sortie duquel chaque cuvette analysée est récupérée dans un bac 9 prévu à cet effet.

Le fonctionnement de ces différents postes est géré par un processeur P comportant une unité centrale ainsi que des périphériques tels que, par exemple, un ensemble écran 10/clavier 11.

L'entraînement du film 3 est assuré au moyen d'un mécanisme d'entraînement faisant intervenir une courroie sans fin 12 guidée à chaque extrémité par des galets 13, 14. Cette courroie comporte un crantage dont les crans sont espacés d'une distance égale à un multiple de la largeur des cuvettes (par exemple de 4-5 cuvettes). Ces crans présentent un profil à développante de cercle qui correspond à une crémaillère de forme de denture normale de manière à engrener parfaitement entre les dents du profil dentelé de la bande ; ils sont ainsi à même d'entraîner la bande de cuvettes avec précision, avec auto-centrage et compensation des jeux éventuels.

Le poste de pipetage 6 est desservi par une pipette verticale automatisée 15, mobile en hauteur, de manière à pouvoir prendre une position basse de pipetage ou de rinçage et une position haute permettant ses déplacements dans un plan horizontal.

Cette pipette 15 est fixée à l'une des extrémités d'un bras 16 monté rotatif par son autre extrémité autour d'un axe vertical 17. L'entraînement en rotation du bras 16 est assuré par un moteur commandé par le processeur P.

Grâce à ce mécanisme particulièrement simple, la pipette 15 peut être amenée successivement à l'aire de pipetage du poste de pipetage 6, à une aire de rinçage 18 diamétralement opposée, équipée d'une ou plusieurs cuves de rinçage et à deux aires de prélèvement 19, 20 disposées symétriquement par rapport à l'axe passant par l'aire de pipetage 6 et l'aire de rinçage 18.

Les aires de prélèvement 19, 20 sont situées dans le trajet de récipients RE₁, RE₂ portés par deux carrousels respectifs CR₁, CR₂ mobiles en rotation autour de deux axes verticaux 21, 22 et commandés par deux moteurs pilotés par le processeur P.

L'un de ces carrousels CR₁ est destiné à contenir les récipients RE₁ d'échantillons sanguins à analyser, tandis que l'autre CR₂ contient des récipients RE₂ affectés aux différents réactifs utilisables dans le cadre des analyses que l'on veut effectuer.

Bien entendu, le processeur P est programmé de manière à commander des séquences de pipetage appropriées à la nature des analyses à effectuer, et pouvant comprendre successivement :
- un rinçage préalable de la pipette 15,
- le prélèvement d'une dosé d'échantillon contenu dans l'un des récipients RE₁ du carrousel CR₁,
- l'injection de cette dose dans une cuvette C située dans le poste de pipetage 6,
- le rinçage de la pipette 15,
- le prélèvement d'une dose de réactif contenu dans l'un des récipients RE₂ du carrousel CR₂,
- l'injection de cette dose de réactif dans la cuvette C,
- l'identification des échantillons sanguins à analyser ainsi que celle des réactifs s'effectuant automatiquement grâce à un lecteur de code à barres 23 apte à effectuer la lecture de codes à barres présents sur les récipients RE₁, RE₂ portés par les carrousels CR₁, CR₂.

Dans cet exemple, pour ces lectures, le lecteur de codes à barres unique 23 est monté à l'extrémité d'un bras 24 pivotant autour d'un axe vertical 25 de manière à pouvoir occuper trois positions, à savoir :
- une position P₁ de lecture des codes à barres des récipients RE₁ du carrousel CR₁,
- une position P₂ de lecture des codes à barres des récipients RE₂ du carrousel CR₂, et
- une position P₃ de lecture de récipients placés par l'opérateur dans un poste de lecture, par exemple en vue de la saisie des informations exploitées par le processeur dans le cadre du fonctionnement de l'appareil.

Le poste de mesure 7 comprend ici trois positions de mesures successives comprenant chacune (figure 4) un couple d'électroaimants coaxiaux E₁, E'₁ - E₂, E'₂ - E3, E'₃ situés de part et d'autre du film 3, au droit des faces latérales des cuvettes C.

Le poste 7 comprend également :
- une source de lumière infrarouge 26 située au dessus de la cuvette,
- une barrette de détecteurs à transfert de charge (DTC) 27 située au-dessous des cuvettes C portées par le film sur laquelle est projetée l'image de la bille éclairée par la source de lumière.

L'emploi de plusieurs positions de mesure sur le trajet du film présente l'avantage d'autoriser une plus grande souplesse de fonctionnement.

Il est à noter que le support de la source de lumière qui est fixé sur le rail 5 assure par ailleurs un maintien par le dessus de l'ensemble cuvettes/film afin d'éviter la sortie du rail.

Les électroaimants E₁, E'₁ - E₂, E'₂ - E₃, E'₃ sont excités par un circuit de puissance PR piloté par le processeur P de manière à engendrer un champ magnétique impulsionnel susceptible d'entraîner la bille BE selon un déplacement alternatif au fond de la cuvette C.

La caméra 27 est couplée au processeur P qui analyse, en temps réel, l'image grâce à un logiciel approprié, de manière à mesurer l'amplitude des oscillations de la bille BE et déterminer l'instant critique où cette amplitude s'abaisse en dessous d'un seuil déterminé (par exemple 50 % de l'amplitude initiale).

Bien entendu, le processeur P effectue un comptage du temps entre le moment où le réactif a été injecté dans la cuvette C et cet instant critique, de manière à en déduire un temps de coagulation.

Les déplacements du film sont synchronisés avec les temps de fonctionnement de chacun des postes de l'appareil et notamment avec les impulsions de champ magnétique engendrées par les bobines.

Eventuellement, le poste de pipetage pourra être situé en un même emplacement que le poste de mesure.

Bien entendu, l'invention ne se limite pas au mode d'exécution précédemment décrit.

Ainsi, par exemple, chaque ensemble source infrarouge/caméra pourra présenter un champ incluant plusieurs cuvettes excitées chacune par un couple d'électroaimants distincts, de manière à suivre la cuvette sur une avance de plusieurs pas avec un processeur P programmé de manière à détecter simultanément les déplacements des billes de différentes cuvettes.

## Revendications

1. Dispositif pour l'analyse automatisée d'un échantillon de liquide, ce dispositif comportant une succession de cuvettes (C) à usage unique comprenant chacune un fond, une face supérieure opposée au fond présentant une ouverture et deux rebords opposés (R1, R2) qui s'étendent de part et d'autre de la cuvette sensiblement dans le plan de l'ouverture, les cuvettes étant disposées côte à côte et solidarisées les unes aux autres par un film souple (3) fixé sur lesdits rebords (R1, R2), recouvrant au moins partiellement les ouvertures desdites cuvettes (C), et présentant une succession d'orifices (4) situés respectivement au droit des ouvertures desdites cuvettes, ces orifices étant dimensionnés de manière à permettre l'engagement sans contact des moyens d'injection et/ou de prélèvement, un poste de détection optique (7) comprenant un détecteur optoélectronique (27) disposé en dessous du fond de la cuvette,
**caractérisé en ce que**
le poste de détection optique (7) comprend en outre une source lumineuse (26) située au dessus de la cuvette et éclairant la face supérieure de celle-ci et **en ce que** le film (3) est réalisé en une matière diffusante pour la lumière.

2. Dispositif selon la revendication 1,
**caractérisé en ce que** les dimensions de l'orifice (4) sont déterminées en fonction des dimensions de la pipette, de sa position ainsi que de l'homogénéité recherchée de l'intensité des faisceaux lumineux traversant un volume utile prédéterminé de la cuvette.

3. Dispositif selon la revendication 1,
**caractérisé en ce que** le fond des cuvettes (C) constitue le chemin de roulement d'une bille (BE) entraînée par un champ magnétique extérieur.

4. Dispositif selon l'une des revendications 2 et 3,
**caractérisé en ce que** le susdit orifice (4) présente la forme d'une ouverture axée parallèlement au chemin de roulement de la bille (BE) et dont la largeur est légèrement inférieure au diamètre de la bille.

5. Dispositif selon la revendication 1,
**caractérisé en ce que** la matière constituant le film présente des propriétés d'absorption de liquide.

6. Dispositif selon la revendication 1,
**caractérisé en ce que** la succession de cuvettes suit un trajet passant successivement par un poste de pipetage (6), un poste de détection (7) et un poste de découpe (8) des cuvettes analysées.

7. Dispositif selon la revendication 1,
**caractérisé en ce que** lesdites cuvettes (C) analysées sont recueillies dans un unique contenant (9).

8. Dispositif selon la revendication 1,
**caractérisé en ce que** lesdits rebords (R₁, R₂) présentent une forme telle qu'ils puissent engrener entre les crans d'une courroie d'entraînement.

9. Dispositif selon la revendication 8,
**caractérisé en ce que** lesdits crans présentent un profil à développante de cercle qui correspond à une crémaillère de forme de denture normale.

10. Dispositif selon l'une des revendications 8 et 9,
**caractérisé en ce que** lesdits rebords (R₁, R₂) présentent la forme d'un trapèze isocèle dont la grande base est solidaire de la cuvette (C).

11. Dispositif selon la revendication 10,
**caractérisé en ce que** les bordures latérales du film (3) présentent dans l'intervalle des rebords (R₁, R₂) des cuvettes successives des découpes trapézoïdales dont les bords obliques s'étendent au droit des bords obliques des rebords (R₁, R₂).

12. Dispositif selon la revendication 1,
**caractérisé en ce que** la source lumineuse dudit poste de détection (7) est une source de lumière infrarouge (26) et le détecteur optoélectronique est une caméra.

13. Dispositif selon la revendication 1,
**caractérisé en ce que** le support de la source lumineuse fixé sur le rail (5) maintient par le dessus l'ensemble cuvettes (C)/film (3).

14. Dispositif selon la revendication 3,
**caractérisé en ce que** le champ magnétique extérieur est engendré par des moyens électromagnétiques (E₁, E'₁ - E₂, E'₂ - E₃, E'₃) placés latéralement par rapport à la succession de cuvettes au droit de leurs faces latérales.

## Claims

1. A device for automated analysis of a liquid sample, this device including a succession of disposable cells (C) each comprising a bottom, an upper face opposite to the bottom, having an aperture and two opposite rims (R1, R2) which extend on either side of the cell substantially in the plane of the aperture, the cells are positioned side by side and made integral with each other by a flexible film (3) fixed on said rims (R₁, R₂), at least partially covering the apertures of said cells (C), and having a succession of ports (4) respectively located at right angles to the apertures of said cells, these ports being dimensioned so as to allow contactless engagement of injection and/or sampling means, an optical detection station (7) comprising an optoelectronic detector (27) positioned underneath the bottom of the cell,
**characterized in that**
the optical detection station (7) further comprises a light source (26) located above the cell and illuminating the upper face of the latter and **in that** the film (3) is made in light-diffusing material.

2. The device according to claim 1,
**characterized in that** the dimensions of the port (4) are determined according to the dimensions of the pipette, to its position as well as to the sought-after homogeneity of the intensity of the light beams passing through a predetermined useful volume of the cell.

3. The device according to claim 1,
**characterized in that** the bottom of the cells (C) form the rolling path of a ball (BE) driven by an external magnetic field.

4. The device according to any of claims 2 and 3,
**characterized in that** the aforesaid port (4) has the shape of an aperture with an axis parallel to the rolling path of the ball (BE) and the width of which is slightly less than the diameter of the ball.

5. The device according to claim 1,
**characterized in that** the material forming the film has liquid absorption properties.

6. The device according to claim 1,
**characterized in that** the succession of cells follows a course successively passing through a pipeting station (6), a detection station (7) and a station for cutting out (8) analyzed cells.

7. The device according to claim 1,
**characterized in that** said analyzed cells (C) are collected in a single container (9).

8. The device according to claim 1,
**characterized in that** said rims (R₁, R₂) have a shape such that they may engage between the notches of a drive belt.

9. The device according to claim 8,
**characterized in that** said notches have a circle involute profile which corresponds to a rack with normal teeth.

10. The device according to any of claims 8 and 9,
**characterized in that** said rims (R₁, R₂) have the shape of an isosceles trapezium, the large base of which is integral with the cell (C).

11. The device according to claim 10,
**characterized in that** the side borders of the film (3) have in the interval of the rims (R₁ , R₂), successive cells of the trapezoidal cut-outs, the oblique edges of which extend at right angles to the oblique edges of the rims (R₁, R₂).

12. The device according to claim 1,
**characterized in that** the light source of said detection station (7) is a source of infrared light (26) and the optoelectronic detector is a camera.

13. The device according to claim 1,
**characterized in that** the support of the light source fixed on the rail (5) holds the cells (C)/film (3) assembly from the top.

14. The device according to claim 3,
**characterized in that** the external magnetic field is generated by electromagnetic means (E₁, E'₁-E₂, E'₂-E₃, E'₃,) placed sideways relatively to the succession of cells at right angles to their side faces.

## Patentansprüche

1. Vorrichtung zur automatischen Analyse einer Flüssigkeitsprobe, wobei diese Vorrichtung aufeinanderfolgende Einwegküvetten (C) enthält, die je einen Boden umfassen, wobei eine dem Boden gegenüberliegende Oberseite eine Öffnung und zwei gegenüberliegende überstehende Kanten (R₁, R₂) aufweist, die sich auf beiden Seiten der Küvette etwa in der Ebene der Öffnung erstrecken, wobei die Küvetten Seite an Seite angeordnet und durch eine auf besagten überstehenden Kanten (R₁, R₂) befestigte biegsame feine Schicht (3) miteinander verbunden sind, die mindestens teilweise die Öffnungen der besagten Küvetten (C) abdeckt und nacheinander angeordnete Mündungen (4) aufweist, die rechts an den Öffnungen besagter Küvetten liegen, wobei diese Öffnungen so ausgelegt sind, um den kontaktlosen Eingriff der Einspritzmittel und/oder der Entnahmemittel zu gestatten, wobei eine optische Detektionsstation (7) mit einem optoelektronischen Detektor (27) versehen ist, der unter dem Boden der Küvette angeordnet ist, **gekennzeichnet dadurch, dass** die optische Detektionsstation (7) außerdem eine Lichtquelle (26) umfasst, die oberhalb der Küvette liegt und die Oberseite derselben beleuchtet und **dadurch, dass** die feine Schicht (3) aus einem lichtdurchlässigen Material hergestellt ist.

2. Vorrichtung nach Anspruch 1, **gekennzeichnet dadurch, dass** die Abmessungen der Mündung (4) gemäß den Abmessungen der Pipette, deren Position sowie gemäß der geforderten Homogenität der Intensität der Lichtbündel bestimmt werden, die ein vorgegebenes Nutzvolumen der Küvette durchqueren.

3. Vorrichtung nach Anspruch 1, **gekennzeichnet dadurch, dass** der Boden der Küvetten (C) den Rollweg einer Kugel (BE) bildet, die von einem äußeren Magnetfeld mitgenommen wird.

4. Vorrichtung nach einem der Ansprüche 2 und 3, **gekennzeichnet dadurch, dass** besagte Mündung (4) die Form einer parallel zum Rollweg der Kugel (BE) ausgerichteten Öffnung darstellt und wovon die Breite geringfügig kleiner als der Durchmesser der Kugel ist.

5. Vorrichtung nach Anspruch 1, **gekennzeichnet dadurch, dass** das die feine Schicht bildende Material flüssigkeitaufnehmende Eigenschaften aufweist.

6. Vorrichtung nach Anspruch 1, **gekennzeichnet dadurch, dass** die aufeinanderfolgenden Küvetten einer Strecke folgen, die aufeinanderfolgend durch eine Pipettierstation (6), eine Detektionsstation (7) und eine Zuschnittsstation (8) der analysierten Küvetten führt.

7. Vorrichtung nach Anspruch 1, **gekennzeichnet dadurch, dass** besagte analysierten Küvetten (C) in einem einzigen Behälter (9) gesammelt werden.

8. Vorrichtung nach Anspruch 1, **gekennzeichnet dadurch, dass** besagte überstehende Kanten (R₁, R₂) eine solche Form aufweisen, dass sie zwischen Rastkerben eines Mitnehmerbands eingreifen können.

9. Vorrichtung nach Anspruch 8, **gekennzeichnet dadurch, dass** besagte Rastkerben eine Evolventenverzahnung eines Kreises aufweisen, die einer Zahnführung mit einer normalen Verzahnungsform entspricht.

10. Vorrichtung nach einem der Ansprüche 8 und 9, **gekennzeichnet dadurch, dass** besagte überstehende Kanten (R₁, R₂) die Form eines gleichschenkligen Trapezes aufweisen, deren großes Basisteil einteilig mit der Küvette (C) verbunden ist.

11. Vorrichtung nach Anspruch 10, **gekennzeichnet dadurch, dass** die seitlichen Umrandungen der feinen Schicht (3) im Abstand der überstehenden Kanten (R₁, R₂) der aufeinanderfolgenden Küvetten trapezförmige Ausschnitte aufweisen, deren schräge Ränder sich rechts an den schrägen Rändern der überstehenden Kanten (R₁, R₂) erstrecken.

12. Vorrichtung nach Anspruch 1, **gekennzeichnet dadurch, dass** die Lichtquelle der genannten Detektionsstation (7) eine infrarote Lichtquelle (26) ist und der optoelektronische Detektor eine Fernsehkamera ist.

13. Vorrichtung nach Anspruch 1, **gekennzeichnet dadurch, dass** die Stütze der auf der Schiene (5) befestigten Lichtquelle von unten her die Gesamtheit der Küvetten (C)/feine Schicht (3) zusammenhält.

14. Vorrichtung nach Anspruch 3, **gekennzeichnet dadurch, dass** das äußere Magnetfeld durch elektromagnetische Instrumente (E₁, E'₁ - E₂, E'₂ - E₃, E'₃) erzeugt wird, die relativ längsseitig zu den aufeinanderfolgenden Küvetten, rechts von deren Seitenwänden untergebracht sind.
